# EUROPÄISCHE PATENTANMELDUNG

(11) **EP 3 964 430 A1**
(43) Veröffentlichungstag der Anmeldung: **09.03.2022**
(21) Anmeldenummer: 21195349.2
(22) Anmeldetag: 07.09.2021
(51) Int. Cl.: B62D 53/00

(54) **MATERIALTRANSPORTZUG UND VERFAHREN ZUR WEGFAHRSICHERUNG EINES SOLCHEN MATERIALTRANSPORTZUGES**

(30) Priorität: 08.09.2020 AT 507562020
(71) Anmelder: BRP-Rotax GmbH & Co. KG, 4623 Gunskirchen (AT)
(72) Erfinder: HASELROITHER, Thomas, 4672 Bachmanning (AT); HOLZER, Robert, 4600 Wels (AT); PARTINGER, Stefan Manuel, 4632 Pichl bei Wels (AT)
(74) Vertreter: Harms, Dirk

(57) **Zusammenfassung**

Die Erfindung betrifft einen Materialtransportzug, umfassend ein personengesteuertes Zugfahrzeug (1) mit zumindest einem Rahmenanhänger (3), welcher als Rahmen zur Aufnahme eines Transportwagens (4) ausgebildet ist, wobei der Transportwagen (4) selbst fahrbar ist und seitlich in den Rahmen eingeschoben wird und wobei der Rahmenanhänger (3) ein Betätigungselement (9) aufweist, wobei der Transportwagen (4) beim Einschieben in den Rahmen gegen das Betätigungselement (9) geschoben wird und wobei das Betätigungselement (9) auf ein Sicherungselement (10) wirkt, welches den Transportwagen (4) in der eingeschobenen Position sichert, wobei zumindest ein erstes Detektionselement vorhanden ist, welches die ausreichende Betätigung des Betätigungselements (9) detektiert, wobei am Rahmenanhänger (3) zumindest ein zweites Detektionselement angeordnet ist, welches das Vorhandensein eines Transportwagens (4) innerhalb des Rahmens des Rahmenanhängers (3) detektiert und wobei eine Wegfahrsperre des Zugfahrzeugs (1) aktiviert ist, wenn bei zumindest einem der Rahmenanhänger (3) der Zustand vorliegt, dass das zweite Detektionselement das Vorhandensein eines Transportwagens (4) innerhalb des Rahmens des Rahmenanhängers (3) detektiert und das erste Detektionselement die ausreichende Betätigung des Betätigungselements (9) nicht detektiert.

## Beschreibung

Die Erfindung betrifft ein Fahrzeug in Form eines Materialtransportzugs mit Anhängern, wobei zumindest ein Anhänger als Rahmen zur Aufnahme eines Transportwagens ausgebildet ist.

DE202012002489U1 beschreibt einen Routenzuganhänger, bei welchem ein Verriegelungsmechanismus des Anhängers durch einen Sensor ausgelöst wird.

DE102013112637A1 beschreibt einen Anhänger für einen Schleppzug mit Automatikmodus.

EP2808234A1 beschreibt einen Routenzuganhänger mit einer Hubeinrichtung. Ein Sensor erkennt, ob die Verriegelung verriegelt oder entriegelt ist. Bei einem Wechsel zu einer verriegelten Verriegelung wird ein Hubvorgang auslöst und bei einem Wechsel zu einer entriegelten Verriegelung einen Senkvorgang auslöst. DE202009013359U1 beschreibt einen Anhänger für einen Trailerzug.

Ein Materialtransportzug, welcher als Ausgangspunkt für die gegenständliche Erfindung dient, umfasst ein Zugfahrzeug, an welches ein oder mehrere Anhänger angeschlossen sind, wobei zumindest ein Anhänger als Rahmen zur Aufnahme eines Transportwagens ausgebildet ist. Der Rahmen ist derart ausgebildet, dass der Transportwagen seitlich in diesen eingeschoben werden kann und bei vollständigem Einschub im Rahmen arretiert werden kann.

Der Rahmen liegt insbesondere als E-Rahmen vor, also als E-förmiger Rahmen. Anders formuliert, weist der Rahmen ein vorderes Querelement und ein hinters Querelement auf, wobei sich quer auf die Ausrichtung quer zur Transportrichtung des Zuges bezieht. Die beiden Querelemente sind an einem ihrer Enden durch ein Längselement verbunden. Im Bereich zwischen den Querelementen ragt ein mittleres Querelement vom Längselement ab. Die beiden endseitigen Querelemente weisen Kupplungselemente auf, sodass diese mit dem vorhergehenden Wagen (oder dem Zugfahrzeug) und dem nachfolgenden Wagen verbunden werden können. Das mittlere Querelement weist eine Achse mit Rollen oder Rädern auf. Der Transportwagen, welcher vier Rollen oder Räder aufweist, welche typischerweise um eine senkrechte Achse frei drehbar und somit jeweils in alle Richtungen frei lenkbar sind, wird in den Rahmen eingeschoben, sodass das mittlere Querelement zwischen zwei Rollen/Räder-paaren des Transportwagens liegt.

Beim Einschieben des Transportwagens in den Rahmen drückt dieser gegen einen Schieber oder Hebel, welcher auf zumindest ein Sicherungselement wirkt. Wenn der Schieber oder Hebel weit genug bewegt wird, wird der Transportwagen durch das zumindest eine Sicherungselement im Rahmen gesichert.

Zum Transport mit dem Materialtransportzug werden die Transportwagen angehoben, sodass nur die Rollen oder Räder des mittleren Querelements in Kontakt mit dem Boden sind.

Problematisch hat sich erwiesen, dass es dazu kommen kann, dass der Transportwagen nicht weit genug in den Rahmen eingeschoben wird, sodass dieser nicht durch das Sicherungselement, insbesondere die beiden Sicherungsbolzen, gesichert wird. Bei der Fahrt kann sich der Transportwagen aufgrund von Fliehkräften seitlich aus dem Rahmen bewegen, was zu Unfällen mit erheblichem Sachschaden geführt hat.

Die Aufgabe der gegenständlichen Erfindung ist die Verbesserung bestehender Materialtransportzüge, sodass derartige Unfälle vermieden werden können.

Da es dafür, auch auf Nachfrage beim Hersteller solcher Materialtransportzüge und E-Rahmen, keine Lösung gab, hat sich die Anmelderin selbst dieser Problematik angenommen.

Die Aufgabe der Erfindung wird mit einem Materialtransportzug nach Anspruch 1 gelöst.

Eine Ausführungsvariante betrifft einen Materialtransportzug, umfassend ein personengesteuertes Zugfahrzeug mit zumindest einem Rahmenanhänger, welcher als Rahmen zur Aufnahme eines Transportwagens ausgebildet ist, wobei der Transportwagen selbst fahrbar ist und seitlich in den Rahmen eingeschoben wird und wobei der Rahmenanhänger ein Betätigungselement aufweist, wobei der Transportwagen beim Einschieben in den Rahmen gegen das Betätigungselement geschoben wird und wobei das Betätigungselement auf ein Sicherungselement wirkt, welches den Transportwagen in der eingeschobenen Position sichert, wobei zumindest ein erstes Detektionselement vorhanden ist, welches die ausreichende Betätigung des Betätigungselements detektiert und wobei das Zugfahrzeug nur in Bewegung gesetzt werden kann, wenn alle Transportwagen vollständig in den jeweiligen Rahmenanhänger eingeschoben und damit vom jeweiligen Sicherungselement gesichert sind.

Bevorzugt ist am Rahmenanhänger zumindest ein zweites Detektionselement angeordnet, welcher das Vorhandensein eines Transportwagens innerhalb des Rahmens des Rahmenanhängers detektiert.

Bevorzugt ist das zweite Detektionselement nahe am freien Ende von Querelementen des Rahmens angebracht, sodass das Einschieben eines Transportwagens erkannt wird, bevor das Betätigungselement betätigt wird.

Bevorzugt ist das zweite Detektionselement ein am Rahmen angeordneter Lichtschranken, welcher das Einschieben eines Transportwagens erkennt, bevor des Betätigungselement betätigt wird, wobei der Lichtschranken vom vollständig eingeschobenen Transportwagen unterbrochen bleibt.

Bevorzugt drückt das Betätigungselement gegen einen Kontaktgeber, wenn sich dieses in jener Position befindet, in welcher das Sicherungselement ausgefahren ist.

In einer Ausführungsvariante umfasst das Zugfahrzeug einen Totmannschalter, insbesondere als Fußschalter, sodass dieses nur in Fahrt gesetzt werden kann, wenn der Totmannschalter betätigt ist, wobei im Leitungspfad des Totmannschalters zumindest ein weiterer Schalter angeordnet ist, welcher geöffnet ist, wenn in zumindest einem Rahmenanhänger des Materialtransportzugs ein Transportwagen eingeschoben ist und die ausreichende Betätigung des Betätigungselements dieses Rahmenanhängers nicht detektiert wird.

Bevorzugt sind die Rahmenanhänger mit elektrischen Leitungen versehen, welche von einem vorderen Querelement zu einem hinteren Querelement des jeweiligen Rahmenanhängers verlaufen, wobei die Detektionselemente des jeweiligen Rahmenanhängers an diesen Leitungen angeschlossen sind und die Leitungen mit vorherigen und nachfolgenden Anhängern und dem Zugfahrzeug des Materialtransportzugs koppelbar sind.

Bevorzugt liegt, bezogen auf das Zugfahrzeug, zumindest ein anderer Anhänger, welcher nicht zur Aufnahme eines Transportwagens dient, vor zumindest einem Rahmenanhänger vor, wobei der besagte andere Anhänger mit elektrischen Leitungen versehen ist, welche vom vorderen Ende des anderen Anhängers zum hinteren Ende des anderen Anhängers verlaufen und die Leitungen mit vorherigen und nachfolgenden Anhängern des Materialtransportzugs koppelbar sind.

Bevorzugt ist am Zugfahrzeug eine optische Anzeige angebracht, welche anzeigt, ob alle Transportwagen vollständig im jeweiligen Rahmenanhänger eingeschoben sind oder nicht.

Eine Ausführungsvariante betrifft ein Verfahren zur Wegfahrsicherung eines Materialtransportzuges, umfassend ein personengesteuertes Zugfahrzeug mit zumindest einem Rahmenanhänger, welcher als Rahmen zur Aufnahme eines Transportwagens ausgebildet ist, wobei der Transportwagen selbst fahrbar ist und seitlich in den Rahmenanhänger eingeschoben wird und wobei der Rahmenanhänger ein Betätigungselement aufweist, wobei der Transportwagen beim Einschieben in den Rahmenanhänger gegen das Betätigungselement geschoben wird und wobei das Betätigungselement auf ein Sicherungselement wirkt, welches den Transportwagen in der eingeschobenen Position sichert, wobei das Zugfahrzeug einen Totmannschalter aufweist, welcher zu betätigen ist, um das Zugfahrzeug in Fahrt setzen zu können, wobei
jeder Rahmenanhänger einen ersten Schalter aufweist, welcher geschlossen ist, wenn eine ausreichende Betätigung des Betätigungselements und/oder eine Sicherung durch das Sicherungselement detektiert wird, wobei jeder Rahmenanhänger einen zweiten Schalter aufweist, welcher offen ist, wenn ein Transportwagen in den jeweiligen Rahmenanhänger eingeschoben wird oder ist, wobei die beiden Schalter des jeweiligen Rahmenanhängers ODER verknüpft sind und mehrere Rahmenanhänger und der Totmannschalter UND verknüpft sind.

In einer weniger bevorzugten Ausführungsvariante ist es aber auch möglich, dass die Wegfahrsperre auf andere Weise als über einen Schalter im elektrischen Pfad eines Totmannschalters vorgenommen wird. Beispielsweise kann die Wegfahrsperre auch in der Fahrzeugsteuerung implementiert sein, sodass diese die Fahrfreigabe nur gibt, wenn das gegenständliche Sicherheitssysteme an keinem der Rahmenanhänger eine ungesicherte Beladung mit einem Transportwagen erkennt.

Die Schalter können in einer Ausführungsvariante physisch in einem Leitungspfad am jeweiligen Rahmenanhänger vorliegen.

Die Schalter können in einer Ausführungsvariante durch eine Programmierung einer Datenverarbeitungseinheit, wie einem Mikrokontroller, am jeweiligen Rahmen ausgeführt sein, wobei die Datenverarbeitungseinheit Signale der Detektionselemente erhält und für den jeweiligen Rahmenanhänger ein Signal generiert, welches zumindest die Information enthält, ob ein Transportwagen im Rahmenanhänger gesichert ist oder nicht. Die Datenverarbeitungseinheit kann auch ein Relais oder einen anderen Schalter betätigen, welches oder welcher in einem Leitungspfad am jeweiligen Rahmenanhänger vorliegt, oder ein Signal an eine zentrale Datenverarbeitungseinheit am Zugfahrzeug senden.

In einer Ausführungsvariante kommunizieren die Detektionselemente an den Rahmenanhängern direkt mit einer zentralen Datenverarbeitungseinheit am Zugfahrzeug, in welcher Datenverarbeitungseinheit die logische Verknüpfung der Detektionselemente erfolgt. Die zentrale Datenverarbeitungseinheit kann ein Relais oder einen anderen Schalter betätigen, welches oder welcher im Leitungspfad des Totmannschalters vorliegt.

Auch eine mechanische Sperre des Totmannschalters, durch einen zusätzlichen Aktuator, ist denkbar, um das elektrische System des Materialtransportzuges und das elektrische System der gegenständlichen Sicherheitsvorrichtung vollständig zu trennen. Dazu kann die gegenständliche Sicherheitsvorrichtung eine eigene Stromquelle, insbesondere eine, bevorzugt aufladbare, Batterie aufweisen.

Das elektrische System der gegenständlichen Sicherheitsvorrichtung kann aber auch von der Fahrzeugbatterie versorgt werden.

Die Erfindung wird an Hand von Zeichnungen veranschaulicht:
- Fig. 1:: zeigt einen Materialtransportzug nach dem Stand der Technik in Ansicht von oben und von der Seite.
- Fig. 2:: zeigt einen erfindungsgemäß verbesserten Materialtransportzug in Ansicht von oben und von der Seite.
- Fig. 3:: zeigt einen erfindungsgemäß verbesserten Materialtransportzug in Ansicht von oben mit unvollständig eingeschobenem Transportwagen.
- Fig. 4:: veranschaulicht die Schaltung bzw. logische Verknüpfung der Detektionselemente eines erfindungsgemäß verbesserten Materialtransportzugs in Ansicht von oben.
- Fig. 5:: veranschaulicht die bevorzugte Anordnung eines Kontaktgebers an der Unterseite eines Rahmenanhängers.

Die in den Figuren gezeigten Ausführungsformen zeigen lediglich mögliche Ausführungsformen, wobei an dieser Stelle bemerkt sei, dass die Erfindung nicht auf diese speziell dargestellten Ausführungsvarianten derselben eingeschränkt ist, sondern auch Kombinationen der einzelnen Ausführungsvarianten untereinander und eine Kombination einer Ausführungsform mit der oben angeführten allgemeinen Beschreibung möglich sind. Diese weiteren möglichen Kombinationen müssen nicht explizit erwähnt sein, da diese weiteren möglichen Kombinationen aufgrund der Lehre zum technischen Handeln durch gegenständliche Erfindung im Können des auf diesem technischen Gebiet tätigen Fachmannes liegen.

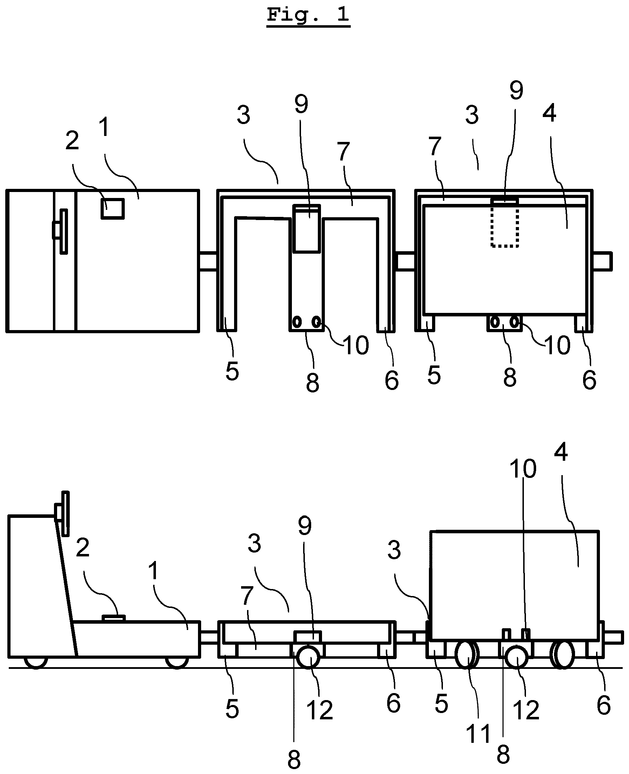

Fig. 1 veranschaulicht einen von der Anmelderin vormals eingesetzten Materialtransportzug in Ansicht von oben und in Seitenansicht. Dieser stellt den der Anmelderin bekannten nächsten Stand der Technik dar.

Der nach dem Stand der Technik bekannte Materialtransportzug umfasst ein Zugfahrzeug 1, welches einen Totmannschalter 2 aufweist, welcher als Fußschalter vorliegt. Nur bei betätigtem Totmannschalter 2 kann das Zugfahrzeug 1 in Fahrt gesetzt werden. Vom Zugfahrzeug 1 wird zumindest ein Rahmenanhänger 3 gezogen, welcher zur Aufnahme eines Transportwagens 4 ausgelegt ist. Der Rahmenanhänger 3 weist ein vorderes Querelement 5 und ein hinteres Querelement 6 auf, welche einseitig durch ein Längselement 7 verbunden sind. Etwa mittig vom Längselement 7 ragt ein mittleres Querelement 8 ab. Gegenüberliegend zum Längselement 7 ist der Rahmen des Rahmenanhängers 3 offen.

An der Oberseite des mittleren Querelements 8 liegt ein Betätigungselement 9 in Form eines Schiebers vor. Am freien Ende des mittleren Querelements 8 liegt ein Sicherungselement 10 in Form von zwei Bolzen vor.

Der Transportwagen 4 kann seitlich in den Rahmenanhänger 3 geschoben werden, wobei der Transportwagen 4 dabei auf seinen eigenen Rädern 11 bewegt wird. Wenn der Transportwagen 4 ausreichend weit in den Rahmenanhänger 3 geschoben wird, drückt dieser das Betätigungselement 9 in Richtung des Längselements 7. Das Betätigungselement 9 wirkt über ein Gestänge, welches unter dem mittleren Querelement 8 vorliegt, auf das Sicherungselement 10, sodass dieses nach oben ausgefahren wird und so den Transportwagen 4 am freien Ende des mittleren Querelements 8 sichert. Wird der Transportwagen 4 nicht ausreichend weit gegen das Betätigungselement 9 bewegt, wird dieser nicht gesichert.

Die Rahmenanhänger 3 weisen ein hydraulisches System auf, über welches die jeweilige Achse eines Rahmenanhängers 3, an welcher zwei Räder 12 vorliegen, vom mittleren Querelement 8 nach unten abgedrückt werden kann, sodass die Räder 11 des Transportwagens 4 vom Boden abgehoben werden.

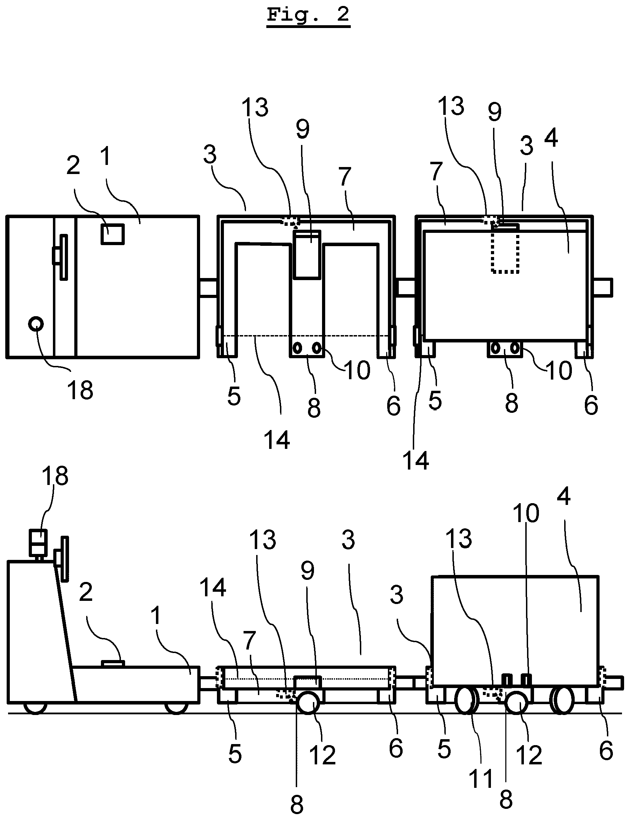

Diese Vorrichtung des Stands der Technik wurde um die erfindungsgemäßen Merkmale ergänzt, welche in den Fig. 2-5 veranschaulicht sind. Die bereits beschriebenen Merkmale liegen daher auch bei der gegenständlichen Vorrichtung vor.

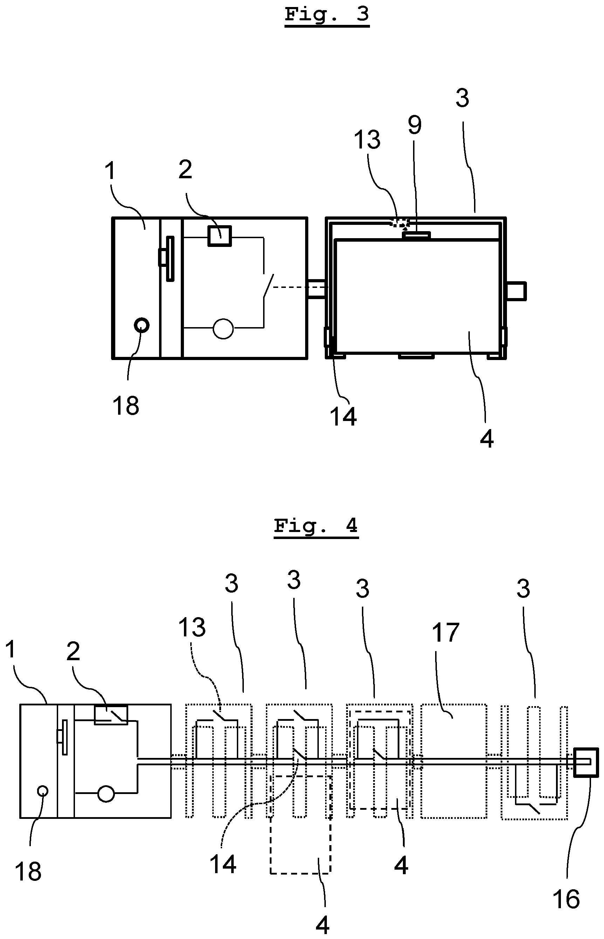

Fig. 2 veranschaulicht einen erfindungsgemäßen Materialtransportzug in Ansicht von oben und in Seitenansicht. Der erfindungsgemäß ergänzte Rahmenanhänger 3 weist ein erstes Detektionselement auf, welches bevorzugt in Form eines Kontaktgebers 13 vorliegt. Das erste Detektionselement detektiert, ob das Betätigungselement 9 ausreichend weit verschoben ist, damit das Sicherungselement 10 hinter dem Transportwagen 4 ausgefahren ist. Bevorzugt liegt der Kontaktgeber 13 in Form eines tastend betätigten Kontaktgebers bzw. Kontaktschalters vor. Das erste Detektionselement kann über einen Datenbus oder drahtlos ein Signal zu seinem Zustand liefern, oder, wie in Fig. 4 veranschaulicht ist, einen elektrischen Leiter schalten, insbesondere bei Betätigung durch das Betätigungselement 9 einen Schalter schließen.

Als Detektionselement wird ein jedes Element verstanden, welches eine Betätigung bzw. eine Bewegung des Betätigungselements detektieren kann, also die Zustandsänderung der Betätigungselements entweder in Form eines Signals über eine Datenleitung mitteilen kann, oder bevorzugt durch das Schließen oder Öffnen eines elektrischen Pfades die Betätigung bzw. eine Bewegung des Betätigungselements in eine elektrische Zustandsänderung (Ein/Aus bzw. 0/1) umwandeln kann.

Bevorzugt weist der erfindungsgemäß ergänzte Rahmenanhänger 3 ein zweites Detektionselement auf, welches bevorzugt in Form eines Lichtschrankens 14 vorliegt. Mit dem zweiten Detektionselement wird erkannt, ob ein Transportwagen 4 in den Rahmenanhänger 3 geschoben wurde, oder ob der Rahmenanhänger 3 leer ist. Das zweite Detektionselement ist bevorzugt am offenen Ende des Rahmenanhängers 3 angeordnet, sodass ein teilweises Einschieben des Transportwagens 4 frühzeitig erkannt wird. Das zweite Detektionselement ist bevorzugt so am offenen Ende des Rahmenanhängers 3 angeordnet, sodass es bei vollständigem Einschieben des Transportwagens 4 das Vorhandensein des Transportwagens 4 weiterhin detektiert.

Das zweite Detektionselement kann über einen Datenbus oder drahtlos ein Signal zu seinem Zustand liefern. Das zweite Detektionselement kann ein jedes Element sein, welches das Vorhandensein eines Transportwagens 4 detektieren kann, also das Vorhandensein eines Transportwagens 4 entweder in Form eines Signals über eine Datenleitung mitteilen kann, oder bevorzugt durch das Schließen oder Öffnen eines elektrischen Pfades das Vorhandensein eines Transportwagens in eine elektrische Zustandsänderung (Ein/Aus bzw. 0/1) umwandeln kann.

In Fig. 3 ist allgemein veranschaulicht, dass die erfindungsgemäßen Detektionselemente bevorzugt auf den elektrischen Pfad des Totmannschalters 2 wirken, da so kein Eingriff in die Motorsteuerung und andere Systeme des Zugfahrzeugs notwendig ist. Dadurch lässt sich die erfindungsgemäße Maßnahme gut nachrüsten und das Zugfahrzeug bleibt im Wesentlichen unverändert. Das Prinzip besteht darin, dass ein Schalter, welcher im Pfad des Schalters des Totmannschalters 2 liegt, geöffnet wird, wenn ein unvollständiges Beladen eines Rahmenanhängers 3 mit einem Transportwagen 4 detektiert wird.

Fig. 4 veranschaulicht eine bevorzugte elektrische Schaltung des Materialtransportzuges.

Wie in Fig. 4 veranschaulicht ist, kann das zweite Detektionselement einen elektrischen Leiter schalten, insbesondere bei Detektion eines Transportwagens 4 einen Schalter öffnen, welcher Schalter den Schalter des ersten Detektionselementes überbrückt. Solange das zweite Detektionselement keinen Transportwagen 4 detektiert, bleibt dabei der Schalter des ersten Detektionselements, welches die ausreichende Betätigung des Betätigungselements 9 detektiert, überbrückt. Dadurch ist eine elektrische Leitung vom vorderen zum hinteren Ende eines Rahmenanhängers 3 jedenfalls geschlossen, wenn das zweite Detektionselement keinen Transportwagen 4 detektiert (vorderster Rahmenanhänger 3 der Fig. 4). Dadurch ist eine elektrische Leitung vom vorderen zum hinteren Ende eines Rahmenanhängers geschlossen, wenn das zweite Detektionselement einen Transportwagen 4 detektiert und das erste Detektionselement eine ausreichende Betätigung des Betätigungselements 9 detektiert (dritter Rahmenanhänger 3 der Fig. 4). Dadurch ist eine elektrische Leitung vom vorderen zum hinteren Ende eines Rahmenanhängers unterbrochen, wenn das zweite Detektionselement einen Transportwagen 4 detektiert und das erste Detektionselement keine ausreichende Betätigung des Betätigungselements 9 detektiert (zweiter Rahmenanhänger 3 der Fig. 4).

Zusätzlich zu der ersten elektrischen Leitung, welche die Schalter aufweist, ist eine zweite elektrische Leitung vorhanden, welche vom vorderen zum hinteren Ende des Transportwagens 4 verläuft. Über Stecker werden die beiden Leitungen aufeinanderfolgender Wagen verbunden. Beim letzten Wagen bzw. beim letzten Rahmenanhänger 3 kann ein Kurzschlussbügel 16 angebracht werden, welcher die beiden elektrischen Leitungen des letzten Wagens bzw. des letzten Rahmenanhängers 3 verbindet.

Es kann vorkommen, dass der Materialtransportzug auch andere Anhänger 17 aufweist, welche nicht zur Aufnahme von Transportwägen 4 dienen. Diese anderen Anhänger 17 werden bevorzugt mit zwei elektrischen Leitern versehen, welche keine Schalter aufweisen, sodass diese anderen Anhänger 17 auch vor oder zwischen Rahmenanhängern 3 angeordnet werden können und der elektrische Pfad über den anderen Anhänger 17 geschlossen ist.

Wie am letzten Rahmenanhänger 3 veranschaulicht ist, spielt es bei der Schaltung keine Rolle, mit welcher Ausrichtung hinsichtlich ihrer offenen Seite die Rahmenanhänger 3 vorliegen, da es unerheblich ist, ob die Schalter im Hin- oder Rückpfad des jeweiligen Rahmenanhängers 3 vorliegen.

Im Fall der Fig. 4 kann der Materialtransportzug erst in Bewegung gesetzt werden, wenn der vordere Transportwagen 4 vollständig entfernt oder vollständig eingeschoben wird und der Totmannschalter 2 betätigt wird.

Anders ausgedrückt, weist jeder Rahmenanhänger 3 zwei ODER verknüpfte Schalter auf, welche dem ersten und zweiten Detektionselement zugeordnet sind. Die Rahmenanhänger 3 und der Totmannschalter 2 sind UND verknüpft. Genauer gesagt sind alle ODER verknüpften Schalterpaare (aus erstem und zweitem Schalter des jeweiligen Rahmenanhängers 3) aller Rahmenanhänger miteinander UND verknüpft und auch mit dem Totmannschalter 2 UND verknüpft.

Der erste Schalter des jeweiligen Rahmenanhängers ist geschlossen, wenn das Betätigungselement 9 ausreichend betätigt ist. Der zweite Schalter des jeweiligen Rahmenanhängers 3 ist offen, wenn ein Transportwagen 4 im Bereich zwischen den Querelementen 5, 6 des jeweiligen Rahmenanhängers 3 vorhanden ist.

Die Schaltung kann, wie in Fig. 4 veranschaulicht ist, als elektrische Schaltung vorliegen. Weniger bevorzugt könnte die Schaltung mit zumindest einem elektronischen Bauteil oder durch eine Software realisiert sein. Beispielsweise indem die Detektionselemente ihren Zustand an eine Steuerungseinheit, wie einen Mikrokontroller oder eine SPS, übermitteln.

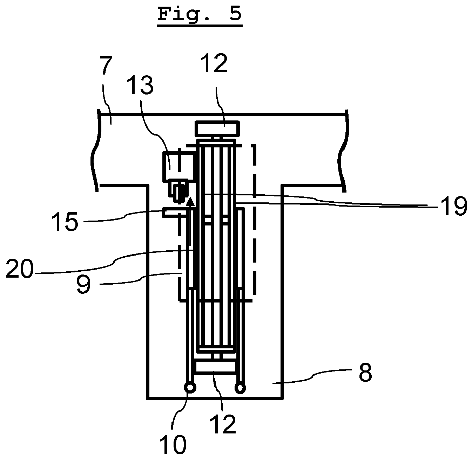

In Fig. 5 ist schließlich noch die bevorzugte Anordnung des ersten Detektionselements in Form eines Kontaktgebers 13, insbesondere Kontaktschalters, dargestellt. Der Kontaktgeber 13 kann insbesondere als Positionsschalter (auch als Endlagenschalter, Endschalter oder Grenztaster bezeichnet) vorliegen. Dieser liegt bevorzugt an der Unterseite des Rahmenanhängers 3 vor.

Nach dem Stand der Technik weist das mittlere Querelement 8 an seiner Unterseite zwei in Längsrichtung des mittleren Querelements 8 verlaufende senkrechte Stege 19 auf. Dort befindet sich nach dem Stand der Technik ein Gestänge oder ein anderer Betätigungsmechanismus, welches oder welcher bei ausreichender Bewegung des Betätigungselements 9 ein Verfahren des Sicherungselements 10 bewirkt.

Der Kontaktgeber 13 weist bevorzugt einen fest mit dem starren Rahmen des Rahmenanhängers 3 verbundenen Körper auf, an welchem Körper ein bewegliches Element des Kontaktgebers 13 vorliegt. Der Kontaktgeber 13 liegt bevorzugt im Eckbereich zwischen dem horizontal ausgerichteten Grundkörper des mittleren Querelements 8 und einem der Stege 19 vor, bevorzugt an jener Seite eines der Stege 19, welche nicht dem anderen Steg 19 zugewandt liegt. Der Kontaktgeber 13 liegt bevorzugt an jenem Ende des mittleren Querelements 8 vor, welches mit dem Längselement 7 verbunden ist. Der Kontaktgeber 13 kann an der Unterseite des horizontal ausgerichteten Grundkörpers des mittleren Querelements 8 befestigt sein, oder an einem der Stege 19.

Im Zuge der Änderungen der gegenständlichen Erfindung wurde an ein Element 20 des Betätigungsmechanismus, welches an der Unterseite des Rahmenanhängers 3 vorliegt und welches Element 20 entweder direkt mit dem an der Oberseite des Rahmenanhängers 3 vorliegenden Betätigungselement 9 verbunden ist, oder von diesem bewegt wird, eine Stoppplatte 15 für den Kontaktgeber 13 befestigt, insbesondere angeschweißt. Wenn ein Transportwagen 4 in den Rahmenanhänger 3 eingeschoben wird, wird dieser gegen das an der Oberseite des Rahmenanhängers 3 vorliegende Betätigungselement 9, insbesondere den Schieber, bewegt. Die Bewegung des Betätigungselement 9 verursacht eine Bewegung des Elements 20 des Betätigungsmechanismus hin zum Kontaktgeber 13.

In jener Position des Betätigungselements 9, insbesondere Schiebers, in welcher das Sicherungselement 10 ausgefahren ist, drückt die Stoppplatte 15 gegen das bewegliche Element des Kontaktgebers 13. Wenn der Kontaktgeber 13 als Kontaktschalter ausgeführt ist, kann über das bewegliche Element das Schließen eines Schalters im elektrischen Pfad des Rahmenanhängers 3 erfolgen. In einer weniger bevorzugten Ausführungsvariante kann das Betätigungselement 9 oder ein von oder mit diesem bewegtes Element 20, direkt gegen den Kontaktgeber 13 wirken, also ohne die Modifikation mit einer Stoppplatte 15. Die Verkabelung des Kontaktgebers 13 erfolgt bevorzugt entlang der hydraulischen Leitungen des Rahmenanhängers 3.

Wie in den Fig. 2-4 veranschaulicht ist, kann am Zugfahrzeug 1 eine optische Anzeige 18 angebracht sein, welche anzeigt, ob alle Transportwagen 4 vollständig im jeweiligen Rahmenanhänger 3 eingeschoben sind oder nicht. Beispielsweise kann dies über eine rote und eine grüne Lampe erfolgen, welche beispielsweise übereinander angeordnet sind. Diese optische Anzeige 18 erleichtert die Fehlersuche. Bevorzugt ist die optische Anzeige 18 erhöht und von hinten gut sichtbar am Zugfahrzeug 1 platziert, sodass man bereits beim Beladen der Rahmenanhänger 3 erkennt, sollte ein Transportwagen 4 nicht gesichert sein.

Wie dem Fachmann ersichtlich ist, bestehen viele Wege um die gegenständliche Erfindung umzusetzen, bzw. um die erfindungsgemäßen Ziele zu erreichen. Dabei stehen dem Fachmann auch Wege zur Verfügung, um die erfindungsgemäßen Ziele zu erreichen, ohne in die beigefügten Ansprüche einzugreifen.

In der Figurenbeschreibung wurde daher speziell auf eine Ausgestaltung eingegangen, welche an bestehenden Materialtransportzügen gemäß Fig. 1 vorteilhaft nachrüstbar ist und welche auch letztlich von der Anmelderin bereits unter Geheimhaltung intern umgesetzt und erprobt wurde. Um den geänderten Materialtransportzug in Betrieb nehmen und testen zu können, wurden die Änderungen vom Hersteller des Transportzuges abgenommen, wobei aufgrund der gegenständlichen Umsetzung unter Nutzung des Totmannschalters vorteilhaft keine zusätzliche Überprüfung durch externe Prüfinstitute notwendig wurde.

## Patentansprüche

1. Materialtransportzug, umfassend ein personengesteuertes Zugfahrzeug (1) mit zumindest einem Rahmenanhänger (3), welcher als Rahmen zur Aufnahme eines Transportwagens (4) ausgebildet ist, wobei der Transportwagen (4) selbst fahrbar ist und seitlich in den Rahmen eingeschoben wird und wobei der Rahmenanhänger (3) ein Betätigungselement (9) aufweist, wobei der Transportwagen (4) beim Einschieben in den Rahmen gegen das Betätigungselement (9) geschoben wird und wobei das Betätigungselement (9) auf ein Sicherungselement (10) wirkt, welches den Transportwagen (4) in der eingeschobenen Position sichert, wobei zumindest ein erstes Detektionselement vorhanden ist, welches die ausreichende Betätigung des Betätigungselements (9) detektiert, **dadurch gekennzeichnet, dass** am Rahmenanhänger (3) zumindest ein zweites Detektionselement angeordnet ist, welches das Vorhandensein eines Transportwagens (4) innerhalb des Rahmens des Rahmenanhängers (3) detektiert und wobei eine Wegfahrsperre des Zugfahrzeugs (1) aktiviert ist, wenn bei zumindest einem der Rahmenanhänger (3) der Zustand vorliegt, dass das zweite Detektionselement das Vorhandensein eines Transportwagens (4) innerhalb des Rahmens des Rahmenanhängers (3) detektiert und das erste Detektionselement die ausreichende Betätigung des Betätigungselements (9) nicht detektiert.

2. Materialtransportzug nach Anspruch 1, **dadurch gekennzeichnet, dass** das zweite Detektionselement nahe am freien Ende von Querelementen des Rahmens angebracht ist, sodass das Einschieben eines Transportwagens (4) erkannt wird, bevor des Betätigungselement (9) betätigt wird.

3. Materialtransportzug nach Anspruch 2, **dadurch gekennzeichnet, dass** das zweite Detektionselement ein am Rahmen angeordneter Lichtschranken (14) ist, welcher das Einschieben eines Transportwagens (4) erkennt, bevor des Betätigungselement (9) betätigt wird, wobei der Lichtschranken (14) vom vollständig eingeschobenen Transportwagen (4) unterbrochen bleibt.

4. Materialtransportzug nach einem der Ansprüche 1 bis 3, **dadurch gekennzeichnet, dass** das Betätigungselement (9) gegen einen Kontaktgeber (13) drückt, wenn sich dieses in jener Position befindet, in welcher das Sicherungselement (10) ausgefahren ist.

5. Materialtransportzug nach einem der Ansprüche 1 bis 4, wobei das Zugfahrzeug (1) einen Totmannschalter (2), insbesondere als Fußschalter, aufweist, sodass dieses nur in Fahrt gesetzt werden kann, wenn der Totmannschalter (2) betätigt ist, **dadurch gekennzeichnet, dass** im Leitungspfad des Totmannschalters (2) zumindest ein weiterer Schalter angeordnet ist, welcher geöffnet ist, wenn in zumindest einem Rahmenanhänger (3) des Materialtransportzugs ein Transportwagen (4) eingeschoben ist und die ausreichende Betätigung des Betätigungselements (9) dieses Rahmenanhängers (3) nicht detektiert wird.

6. Materialtransportzug nach einem der Ansprüche 1 bis 5, **dadurch gekennzeichnet, dass** die Rahmenanhänger (3) mit elektrischen Leitungen versehen sind, welche von einem vorderen Querelement (5) zu einem hinteren Querelement (6) des jeweiligen Rahmenanhängers (3) verlaufen, wobei die Detektionselemente des jeweiligen Rahmenanhängers (3) an diesen Leitungen angeschlossen sind und die Leitungen mit vorherigen und nachfolgenden Anhängern und dem Zugfahrzeug (1) des Materialtransportzugs koppelbar sind.

7. Materialtransportzug nach Anspruch 6, **dadurch gekennzeichnet, dass** bezogen auf das Zugfahrzeug (1) zumindest ein anderer Anhänger (17), welcher nicht zur Aufnahme eines Transportwagens (4) dient, vor zumindest einem Rahmenanhänger (3) vorliegt, wobei der besagte andere Anhänger (17) mit elektrischen Leitungen versehen ist, welche vom vorderen Ende des anderen Anhängers (17) zum hinteren Ende des anderen Anhängers (17) verlaufen und die Leitungen mit vorherigen und nachfolgenden Anhängern des Materialtransportzugs koppelbar sind.

8. Materialtransportzug nach einem der Ansprüche 1 bis 7, **dadurch gekennzeichnet, dass** am Zugfahrzeug (1) eine optische Anzeige (18) angebracht ist, welche anzeigt, ob alle Transportwagen (4) vollständig im jeweiligen Rahmenanhänger (3) eingeschoben sind oder nicht.

9. Verfahren zur Wegfahrsicherung eines Materialtransportzuges, umfassend ein personengesteuertes Zugfahrzeug (1) mit zumindest einem Rahmenanhänger (3), welcher als Rahmen zur Aufnahme eines Transportwagens (4) ausgebildet ist, wobei der Transportwagen (4) selbst fahrbar ist und seitlich in den Rahmenanhänger (3) eingeschoben wird und wobei der Rahmenanhänger (3) ein Betätigungselement (9) aufweist, wobei der Transportwagen (4) beim Einschieben in den Rahmenanhänger (3) gegen das Betätigungselement (9) geschoben wird und wobei das Betätigungselement (9) auf ein Sicherungselement (10) wirkt, welches den Transportwagen (4) in der eingeschobenen Position sichert, wobei das Zugfahrzeug (1) einen Totmannschalter (2) aufweist, welcher zu betätigen ist, um das Zugfahrzeug (1) in Fahrt setzen zu können, **dadurch gekennzeichnet, dass** jeder Rahmenanhänger (3) einen ersten Schalter aufweist, welcher geschlossen ist, wenn eine ausreichende Betätigung des Betätigungselements (9) und/oder eine Sicherung durch das Sicherungselement (10) detektiert wird, dass jeder Rahmenanhänger (3) einen zweiten Schalter aufweist, welcher offen ist, wenn ein Transportwagen (4) in den jeweiligen Rahmenanhänger (3) eingeschoben wird oder ist, wobei die beiden Schalter des jeweiligen Rahmenanhängers (3) ODER verknüpft sind und mehrere Rahmenanhänger (3) und der Totmannschalter (2) UND verknüpft sind.
